## Europäisches Patentamt
## European Patent Office
## Office européen des brevets

(11) Veröffentlichungsnummer : **0 108 972**
**B1**

(12) **EUROPÄISCHE PATENTSCHRIFT**

(45) Veröffentlichungstag der Patentschrift :
08.07.87

(51) Int. Cl.⁴ : **F 16 K   1/30**, F 16 K  27/00

(21) Anmeldenummer : **83110726.3**

(22) Anmeldetag : **27.10.83**

(54) **Gasflaschenventil.**

(30) Priorität : **12.11.82 DE 3241843**

(43) Veröffentlichungstag der Anmeldung :
**23.05.84 Patentblatt 84/21**

(45) Bekanntmachung des Hinweises auf die Patenterteilung : **08.07.87 Patentblatt 87/28**

(84) Benannte Vertragsstaaten :
**AT BE CH DE FR GB IT LI LU NL SE**

(56) Entgegenhaltungen :
**CH-A-   607 646**
**DE-B- 2 034 598**
**DE-C- 1 256 980**
**DE-C- 1 600 937**
**DE-U- 1 742 627**
**FR-A- 2 311 989**
**GB-A- 1 152 890**

(73) Patentinhaber : **Schulz + Rackow GmbH**
**Industriestrasse 8**
**D-3554 Gladenbach (DE)**

(72) Erfinder : **Hennecke, Ernst**
**Schöne Aussicht 1**
**D-3554 Gladenbach 1 (DE)**

(74) Vertreter : **Olbricht, Karl Heinrich, Dipl.-Phys.**
**Am Weinberg 15**
**D-3556 Niederweimar (DE)**

EP 0 108 972 B1

Anmerkung : Innerhalb von neun Monaten nach der Bekanntmachung des Hinweises auf die Erteilung des europäischen Patents im Europäischen Patentblatt kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).

Jouve, 18, rue St-Denis, 75001 Paris, France

## Beschreibung

Die Erfindung betrifft ein Gasflaschenventil zur bedarfsweisen Entnahme insbesondere von brennbarem Flüssiggas.

Herkömmliche Gasflaschenventile dieser Art sind beispielsweise in den DE-C-12 56 980 und DE-C-16 00 937 beschrieben. Sie haben unten einen in eine Gasflasche einschraubbaren Gewindekonus, einen mutterähnlichen Mittelteil mit einer Seitenbohrung zur Aufnahme eines Sicherheitsventils und darüber ein im wesentlichen zylindrisches Gehäuse mit einer Außenrille. Auf dieser kann ein Kugelklemmring eines aufsteckbaren Membrandruckreglers einrasten. Zentrisch sitzt im Gehäuse ein Füll- und Regelventil mit einem federbelasteten Verschlußstück, das über einen Steuerstift vom Druckregler oder von einer Füllarmatur betätigbar ist. Wird der Steuerstift nach unten gedrückt, so hebt das Verschlußstück vom Ventilsitz ab und durch den so gebildeten Kanal strömt Gas entweder unter dem durch den Regler bestimmten Druck aus oder von einer Druckquelle her in die Flasche hinein.

Bei solchen Gasflaschenventilen besteht das Problem, den Kopf der Ventilanordnung vor dem Eindringen von Schmutz zu schützen, der im rauhen Alltag und vor allem bei ungünstigen Umgebungsbedingungen kaum vermeidbar ist. Man hat Abhilfe dadurch versucht, daß Mittel vorgesehen wurden, um den ganzen Kopf, zumindest aber den Strömungskanal zu überdecken. Die dafür benutzten Teile, z. B. eine Hülse gemäß dem DE-U-17 42 627 oder eine Verbreiterung in Form eines Flansches gemäß der DE-C-16 00 937, bieten nicht unter allen Umständen zuverlässigen Schutz für das empfindliche Ventil, schon weil größere Strömungswege davon nicht erfaßt werden. Es sind auch elastische Aufsetzkappen in Gebrauch, die mit einer Lasche am Ventilkopf hängen sollen ; derartige Kappen können aber verloren gehen oder einfach nicht verwendet werden, so daß eine Verunreinigung des Ventils doch möglich ist.

In der GB-A-1 152 890 ist zwar bereits ein Gasflaschenventil mit einer Dichtung vorgeschlagen worden, die eine Kappe mit konisch erweitertem Kragen umschließt, welcher unter Federbelastung von innen her an einen entsprechend zulaufenden konischen Bund gedrückt wird. Dieser Verschluß ist nur von unten her einsetzbar ; er kann nicht abgenommen werden, solange Druck ansteht. Bei gefüllter Flasche läßt sich das Ventil daher weder reinigen noch instandsetzen ; vielmehr muß im Falle eines undichten Rückschlagventils die Flasche entleert werden, d. h. ihr Gasinhalt ist verloren. Ferner ist ein solches Flaschenventil nur für den hochdruckseitigen Anschluß eines Reglers geeignet ; es wird mit einem Schaltmechanismus entweder ganz geöffnet oder ganz geschlossen. Diese Vorrichtung ist also nicht brauchbar in Verbindung mit Aufsteckreglern, durch deren Membranbewegung das Ventil je nach Verbrauchsanforderung weniger oder mehr geöffnet und unter Umständen fortlaufend nachgestellt wird.

Es ist ein wichtiges Ziel der Erfindung, unter Überwindung dieser und weiterer Nachteile des Standes der Technik mit wirtschaftlichen Mitteln ein verbessertes Gasflaschenventil zu schaffen, das einen zuverlässigen Schutz gegen das Eindringen von Staub und Schmutz aus der Umgebung gewährleistet, im übrigen aber gegen herkömmliche Gasflaschenventile ohne weiteres austauschbar ist und auch bei gefüllter Gasflasche gereinigt und gewartet werden kann, ohne daß Gasverluste auftreten. Ferner ist die Erfindung darauf gerichtet, einen verbesserten Einsatz für Gasflaschenventile zu schaffen, der auch bei gefüllter Gasflasche ohne Gasverluste zur Reinigung und Instandsetzung aus- und eingebaut sowie gegen herkömmliche Einsätze bequem ausgetauscht werden kann.

Die Hauptmerkmale eines erfindungsgemäßen Gasflaschenventils sind in Anspruch 1 angegeben. Vorteilhafte Ausgestaltungen sind Gegenstand der Ansprüche 2 bis 14.

Die Erfindung stellt auf sehr einfache Weise sicher, daß Verunreinigungen jeder Art vom eigentlichen Ventil ferngehalten werden, so daß dessen freie Betätigbarkeit selbst unter ungünstigen Umständen gewährleistet ist. Der obere, im wesentlichen zylindrische Teil des Ventilgehäuses nimmt einen Einsatz auf, der das Ventil gegen Verschmutzung und Undichtheit sichert. Zentrisch sitzt in dem Einsatz ein Verschluß der ein Zwischenglied zur bedarfsweisen Betätigung des Regelventils enthält. Dieses liegt somit nicht mehr offen, auch wenn der Aufsteckregler abgenommen bleibt und eine Schutzkappe fehlt oder nicht benutzt wird. Vielmehr wird das Regelventil durch den Verschluß stets abgedeckt. Er enthält einen federbelasteten Stößel, dessen Kopf im Ruhezustand an einer Anlagefläche des Einsatzes innen anliegt. Durch Druck von oben kann der Stößel zum Kraftschluß mit dem Anlagestück des Regelventils einwärts bewegt werden. Letzteres ist nicht wie herkömmlich unmittelbar im Mittelteil des Ventilgehäuses, sondern erfindungsgemäß in einer an dem Einsatz abnehmbar befestigten Halterung gelagert. Diese bildet ein Widerlager für das Ventilfeder und führt den Ventilstift. Die Halterung ist an einem Fortsatz des Einsatzes bequem ein- und ausrastbar.

Die Gestaltung des Einsatzes ist in doppelter Hinsicht neuartig und vorteilhaft : oben deckt der Verschluß das Regelventil zuverlässig ab, das unten an demselben Einsatz lösbar montiert ist. Alle funktionswesentlichen Teile lassen sich mithin mühelos und rasch ausbauen, prüfen und gegebenenfalls instandsetzen oder austauschen, und zwar auch bei gefüllter Gasflasche und ohne Gasverlust. Die Ersatzteil-Lagerhaltung wird dadurch ebenso wie der Wartungsdienst vor Ort stark vereinfacht und verbilligt, und undichte Gasflaschen lassen sich ohne Gasverluste gut umrüsten.

Weitere Merkmale, Einzelheiten und Vorteile der Erfindung ergeben sich aus den Ansprüchen sowie aus der folgenden Beschreibung von Ausführungsbeispielen anhand der Zeichnung. Darin zeigen :

Figur 1 eine Axialschnittansicht eines erfindungsgemäßen Gasflaschenventils mit zugehörigem Aufsteckregler,

Figur 2 eine Ansicht entsprechend Fig. 1, jedoch mit vom aufgesteckten Regler her einwärts bewegtem Stößel,

Figur 3a eine Axialschnittansicht und

Figur 3b eine Druntersicht eines Verschlusses für das Gasflaschenventil gemäß Fig. 1 und 2,

Figur 4a eine Axialschnittansicht und

Figur 4b eine Druntersicht einer abgewandelten Verschluß-Ausführungsform,

Figur 5a eine Seitenansicht, teilweise im Axialschnitt, einer anderen Gestaltung eines Einsatzes für ein erfindungsgemäßes Gasflaschenventil,

Figur 5b eine Druntersicht auf das untere Ende eines Einsatzes gemäß Fig. 5a oder gemäß Fig. 6 und

Figur 6 eine Ansicht entsprechend Fig. 5a. mit noch einer anderen Bauform.

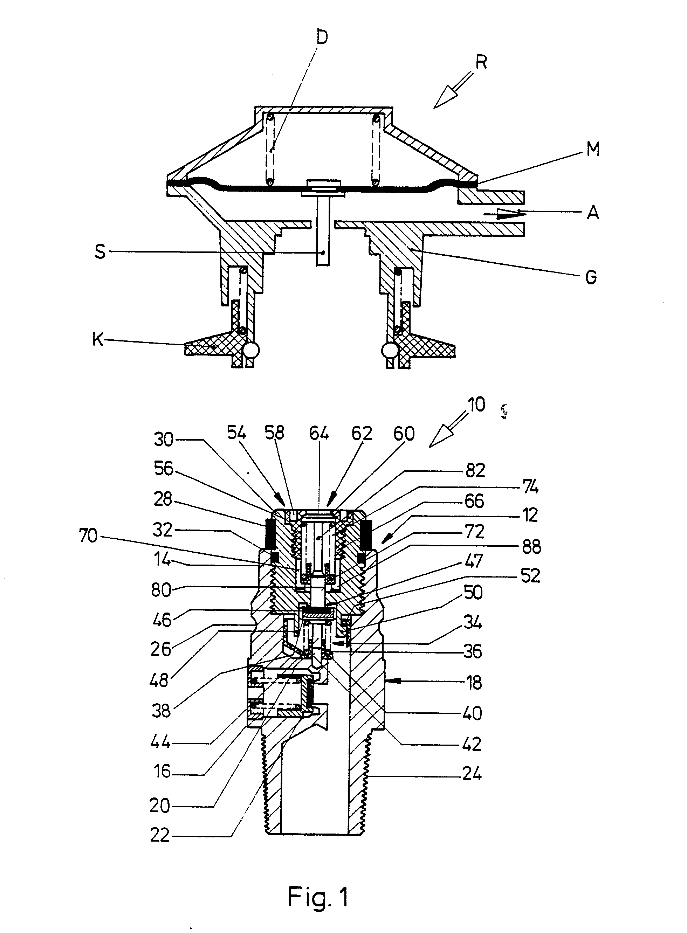

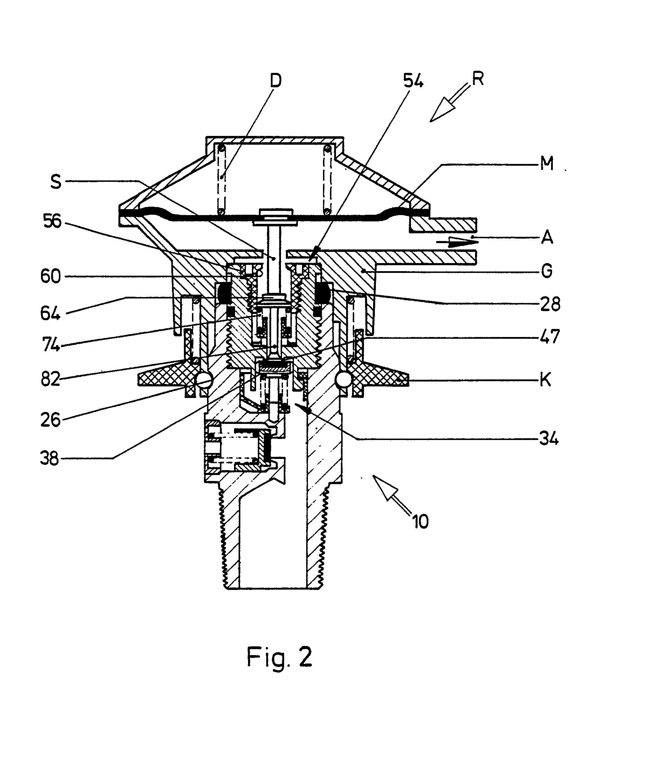

Im Ausführungsbeispiel der Fig. 1 und 2 hat das allgemein mit 10 bezeichnete Gasflaschenventil ein Ventilgehäuse 12 mit einem im wesentlichen zylindrischen Oberteil 14, mit einem Mittelteil 16, der außen Schraubflächen 18 beispielsweise in Form eines Sechskants aufweist, sowie mit einem Unterteil 24, der als Gewindekonus ausgebildet ist und in ein entsprechendes Gegengewinde einer (nicht gezeichneten) Gasflasche eingeschraubt werden kann.

Entweder im Mittelteil 16 oder im Unterteil 24 ist eine Querbohrung 20 vorhanden, die ein Sicherheitsventil 22 aufnimmt. Das Ventilgehäuse 12 kann — wie gezeichnet — einstückig sein. Es ist aber auch möglich und erfindungsgemäß vorgesehen, beispielsweise Oberteil 14 und Mittelteil 16 als Einheit auszubilden, die auf den Unterteil 24 aufgeschraubt werden kann.

Am Übergang vom Oberteil 14 zum Mittelteil 16 ist außen eine Rille 26 vorhanden, die zum Verrasten des Kugelklemmringes K eines Aufsteckreglers dient. Dieser ist in Fig. 1 vor dem Aufkuppeln, in Fig. 2 aufgekuppelt dargestellt. Er hat ein Gehäuse G, zwischen dessen beiden Schalen eine Regelmembran M gehaltert ist. Eine Regelfeder D ist zwischen der oberen Schale (dem Deckel) und der Membran M am Umfang eingespannt. Die untere Schale ist mit dem Kugelklemmring K fest verbunden oder einstückig. Ein Steuerstift S durchragt die untere Gehäuseschale, von der ein Auslaß A seitlich absteht.

In den zylindrischen Oberteil 14 ist ein Einsatz 30 eingeschraubt, der eine zur Abdichtung gegenüber dem Aufsteckregler R dienende Ringmanschette 28 trägt. Im Inneren des Einsatzes 30 und mithin des Gehäusemittelteils 16 befindet sich ein Regelventil 34 mit einer Ventilfeder 36, die sich einerseits an einem Anlagestück 38, andererseits an einem Widerlager 40 abstützt.

Das Widerlager 40 ist als Korb ausgebildet, der eine zentrische Bohrung 42 aufweist. In dieser ist ein Stift 44 des Anlagestückes 38 geführt, dessen Teller eine elastisch-nachgiebige Dichtung 46 aufnimmt. Sie kommt unter dem Druck der Ventilfeder 36 und unter dem Flaschendruck an einem Ventilsitz 47 zur Anlage.

Der Ventilsitz 47 und der obere Teil des Regelventils 34 befinden sich im Inneren eines Fortsatzes 48, der von dem Einsatz 30 nach unten absteht. Er hat radial nach außen gerichtete Vorsprünge 50. Der Widerlager-Korb 40 hat einwärts gerichtete Rastnasen 52 und ist gegen die Kraft der Ventilfeder 36 an dem Fortsatz 48 verrastbar.

Ein Verschluß 54 ist von oben in den Einsatz 30 einführbar. Bevorzugt ist er so eingesetzt, daß ein Flansch 56 des Verschlusses an seiner Oberseite mit der Stirnfläche des Einsatzes 30 fluchtet. Für den Ansatz eines Werkzeuges sind am Verschluß 54 Ausnehmungen 58 vorgesehen, die insbesondere als Sacklochpaar ausgebildet sein können.

An der Innenseite hat der Flansch 56 des Verschlusses 54 eine Anlagefläche 60, an der im Ruhezustand ein federbelasteter Stößel 62 mit dem Stößelkopf 64 anliegt (Fig. 1) oder von der er nach unten abgehoben ist (Fig. 2).

Der Verschluß 54 kann eine Schraubbuchse 66 aufweisen, deren unterer Teil 68 mit Längsschlitzen 70 versehen ist und ein Federlager 72 haltert oder bildet. An diesem stützt sich eine Stößelfeder 74 ab, deren anderes Ende die Unterseite des Stößelkopfes 64 belastet. Der Schaft 82 des Stößels 62 ist mit seinem unteren, vorzugsweise erweiterten Ende in einem Führungsloch 80 des Federlagers 72 geführt. Letzteres wird von Haken 88 am unteren Teil 68 der Schraubbuchse 66 lösbar gehalten.

Während Fig. 1 den Ruhezustand des dargestellten Gasflaschenventils 10 nach der Erfindung zeigt, wobei der Stößel 62 im Verschluß 54 oben anliegt, ist eine Arbeitsstellung in Fig. 2 gezeigt. Hierbei ist unter der Einwirkung einer äußeren Kraft auf den Stößelkopf 64 entgegen der Belastungsfeder 74 der gesamt Stößel 62 nach unten bis zum Kraftschluß mit dem Anlagestück 38 des Regelventils 34 bewegt worden. Eine weitere Abwärtsbewegung des Stößels 62 würde nun das Anlagestück 38 vom Ventilsitz 47 abheben, so daß — nach Maßgabe der Betätigungskraft — Gas durch das so geöffnete Regelventil 34 ausströmen kann. Durch das ausströmende Gas werden irgendwelche Staub- oder Schmutzteilchen, die an dem Stößelkopf 64 sitzen könnten, automatisch herausgeblasen. Der Verschluß 54 fungiert stets als wirksame Abdeckung für das Regelventil 34, das infolgedessen zu keiner Zeit in seiner Funktionsfähigkeit gestört werden kann.

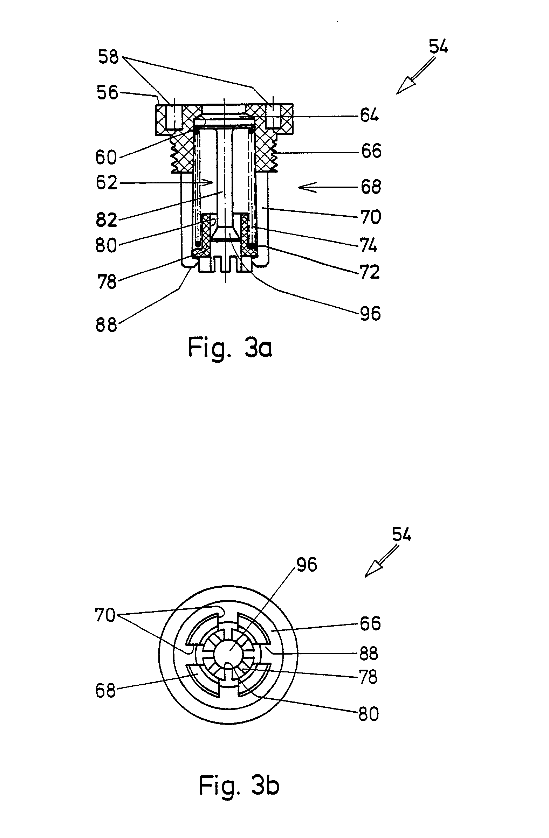

In Fig. 3a und 3b ist eine Ausgestaltung eines Verschlusses 54 veranschaulicht. Gleichartige Elemente sind hierbei mit denselben Bezugszahlen gekennzeichnet. Der Flansch 56 hat wiederum an seiner Obberseite ein Sacklochpaar 58 und innen eine Anlagefläche 60. Die Schraubbuchse 66 weist an ihrem unteren, mit Längsschlitzen 70 versehenen Teil 68 ebenfalls Haken 88 auf, die den Stützteil 78 mit dem Federlager 72 haltern. Letzteres weist ein Führungsloch 80 für das untere Ende des Stößels 62 auf, das als verbreiterter Konus 96 ausgebildet ist. Es ist möglich und erfindungsgemäß vorgesehen, den Körper bzw. die Schraubbuchse 66 des Verschlusses 54 sowie den Stützteil 78 mit dem Federlager 72 aus maßhaltigem Kunststoff zu fertigen, während der Stößel 62 bevorzugt metallisch ist.

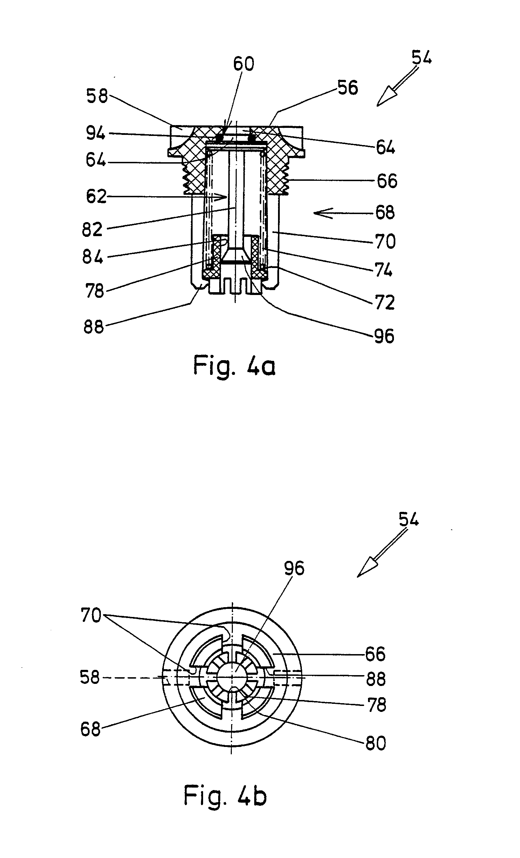

Bei einer abgewandelten Ausführungsform gemäß Fig. 4a und 4b kann die Schraubkappe 66 am Flansch 56 Ausnehmungen 58 in Form von Schraubschlitzen haben. Auch ist es möglich, zwischen Anlagefläche 60 und Stößelkopf 64 einen Dichtungsring 94 vorzusehen. Es kann genügen, wenn der Stützteil 78 von zwei einander gegenüberliegenden Haken 88 untergriffen wird. Bevorzugt sind jedoch wenigstens drei Haken 88 vorhanden, die das Federlager 72 bzw. den Stützteil 78 konzentrisch haltern.

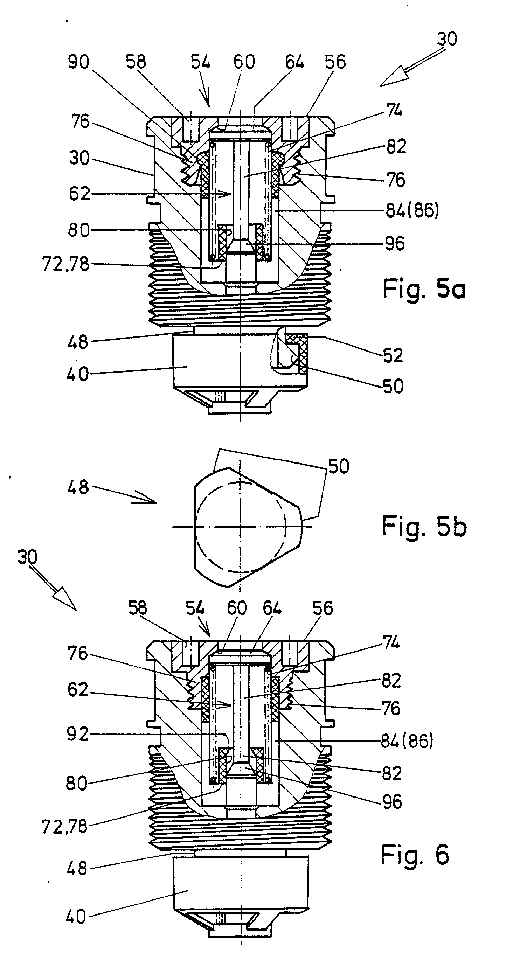

Bei den Gestaltungen gemäß Fig. 5a und 6 ist eine Schraubkappe 76 vorgesehen, in die eine Buchse 84 von unten ragt. Diese kann mit einem Wulst 90 in einer entsprechenden Ringnut der Schraubkappe 76 eingerastet (Fig. 5a) oder nur zylindrisch umschlossen sein (Fig. 6). Eine solche Buchse 84 ist wiederum im unteren Teil mit Längsschlitzen 86 versehen, so daß der Stützteil 78 mit dem Federlager 72 von unten eingeführt und gehalten werden kann. Im Ausführungsbeispiel der Fig. 6 ist das mit einem Konus 96 versehene untere Ende des Stößels 62 im Führungsloch 80 des Stützteils 78 durch einen oberen Kragen 92 umschlossen, der einen zweiten, zusätzlichen Staub- und Schmutzfänger bzw. -abweiser bildet. Diese Ausführungsform ist daher gegen jede Form der Verunreinigung besonders gut abgesichert.

Ferner ist aus Fig. 5b in Verbindung mit Fig. 5a ersichtlich, daß die Unterseite des Fortsatzes 48 am Einsatz 30 als Dreikant mit Vorsprüngen 50 ausgebildet sein kann, die von den Rastnasen 52 am Widerlager 40 übergriffen werden, die zweckmäßig einen hohldreikantförmig gestalteten Korbrand bilden. Diese fertigungstechnisch vorteilhafte und gut zu handhabende Anordnung ermöglicht ein schnelles, bequemes Ein- und Ausrasten des Widerlagers 40, so daß etwaige Wartungsarbeiten am Regelventil 34 und/oder dessen Ersatz einfach und kostengünstig vorgenommen werden können.

Man erkennt, daß der mit dem Verschluß 54 versehene Einsatz 30 jederzeit in ein herkömmliches Gasflaschenventil eingesetzt werden kann, soferne dies nur eine entsprechende Aufnahme bzw. ein Gegengewinde aufweist. Die volle gegenseitige Austauschbarkeit bisheriger und erfindungsgemäßer Gasflaschenventile ist damit gewährleistet.

In den Rahmen der Erfindung fallen zahlreiche Abwandlungen. So kann der Einsatz 30 statt durch eine Ringdichtung 32 auch mit einem stoffschlüssigen Dichtungsmittel in dem Oberteil 14 abgedichtet sein. Dasselbe gilt für den Verschluß 54 im Einsatz 30.

Sämtliche aus den Ansprüchen, der Beschreibung und der Zeichnung hervorgehenden Merkmale und Vorteile der Erfindung, einschließlich konstruktiver Einzelheiten, räumlicher Anordnungen und Verfahrensschritten, können sowohl für sich als auch in den verschiedensten Kombinationen erfindungswesentlich sein.

Legende zu PH 383

| A | Auslaß |
|---|---|
| D | Regelfeder |
| G | Gehäuse |
| K | Kugelklemmring |
| M | Regelmembran |
| R | Aufsteckregler |
| S | Steuerstift |

| 10 | Gasflaschenventil |
|---|---|
| 12 | Ventilgehäuse |
| 14 | Oberteil |
| 16 | Mittelteil |
| 18 | Schraubflächen |
| 20 | Querbohrung |
| 22 | Sicherheitsventil |
| 24 | Unterteil/Gewindekonus |
| 26 | Rille |
| 28 | Ringmanschette |
| 30 | Einsatz |
| 32 | Ringdichtung |
| 34 | Regelventil |
| 36 | Ventilfeder |
| 38 | Anlagestück |
| 40 | Widerlager/Korb |
| 42 | Bohrung |
| 44 | Stift |
| 46 | Dichtung |
| 47 | Ventilsitz |
| 48 | Fortsatz |
| 50 | Vorsprünge |
| 52 | Rastnasen |
| 54 | Verschluß |
| 56 | Flansch |
| 58 | Ausnehmung/Sacklochpaar |
| 60 | Anlagefläche |
| 62 | Stößel |
| 64 | Stößelkopf |
| 66 | Schraubbuchse |
| 68 | unterer Teil |
| 70 | Längsschlitze |
| 72 | Federlager |
| 74 | Stößelfeder |
| 76 | Schraubkappe |
| 78 | Stützteil |
| 80 | Führungsloch |
| 82 | Stößelschaft |
| 84 | Buchse |
| 86 | Schlitze |
| 88 | Haken |
| 90 | Wulst |

92 Kragen
94 Dichtungsring
96 Konus

**Patentansprüche**

1. Gasflaschenventil zur bedarfsweisen Entnahme insbesondere von brennbarem Flüssiggas, mit einem Ventilgehäuse (12), das aus einem etwa zylindrischen Oberteil (14), einem Schraub-Mittelteil (16) und einem als hohler Gewindekonus ausgebildeten Unterteil (24) besteht, wobei im Mittelteil oder im Unterteil eine Querbohrung (20) zur Aufnahme eines Sicherheitsventils (22) vorhanden ist und der Oberteil (14) außen eine Rille (26) hat, auf der ein Kugelklemmring (K) eines aufsteckbaren Membrandruckreglers (R) einrastbar ist, und mit einem im Oberteil (14) angeordneten Einsatz (30) mit einer Ringdichtung (32), der ein federbelastetes Regelventil (34) aufweist, dessen Ventilfeder (36) sich an einem Widerlager (40) abstützt, dadurch gekennzeichnet, daß der Einsatz (30) in den Oberteil (14) einschraubbar ist, die Federbelastung auf ein Anlagestück (38) wirkt und das Widerlager (40) an dem Einsatz abnehmbar angebracht ist, wobei das Anlagestück (38) in dem Widerlager gleitend geführt und über einen mit der Regelmembran (M) verbundenen Steuerstift (S) steuerbar ist, und daß in dem Einsatz ein herausnehmbarer Verschluß (54) angeordnet ist, der einen federbelasteten Stößel (62) lagert, an dem der Steuerstift angreift.

2. Gasflaschenventil nach Anspruch 1, dadurch gekennzeichnet, daß ein Flansch (56), der innen eine Anlagefläche (60) für den Stößelkopf (64) hat, an dem voll eingeschraubten Verschluß (54) mit der oberen Stirnfläche des Einsatzes (30) bündig abschließt.

3. Gasflaschenventil nach Anspruch 1 oder 2, dadurch gekennzeichnet, daß am Kopf des Einsatzes (30) eine Schraubhilfe vorgesehen ist, insbesondere in Form eines Außenprofils oder von Einsecköffnungen (58) zum Ansatz eines Werkzeugs am Verschluß (54), z. B. indem an dessen Oberseite zwei einander diametral gegenüberliegende Sacklöcher, Schraubschlitze o. dgl. vorhanden sind.

4. Gasflaschenventil nach einem der Ansprüche 1 bis 3, dadurch gekennzeichnet, daß der Verschluß (54) eine im unteren Teil (68) mit offen auslaufenden Längsschlitzen (70) versehene Schraubbuchse (66) aufweist, die ein Federlager (72) haltert.

5. Gasflaschenventil nach einem der Ansprüche 1 bis 3, dadurch gekennzeichnet, daß der Verschluß (54) eine Schraubkappe (76) und ein Stützteil (78) für eine Stößelfeder (74) aufweist.

6. Gasflaschenventil nach Anspruch 4 oder 5, dadurch gekennzeichnet, daß im Federlager (72) bzw. Stützteil (78) ein Führungsloch (80) für den Stößelschaft (82) vorhanden ist und daß am unteren Teil (68) des Verschlusses (54) wenigstens zwei Haken (88) angeordnet sind, die das Federlager (72) bzw. das Stützteil (78) untergreifen.

7. Gasflaschenventil nach Anspruch 5 oder 6, dadurch gekennzeichnet, daß in die Schraubkappe (76) ein oberer Wulst (90) einer Buchse (84) einrastbar ist, deren unteres Ende das Federlager (72) bzw. Stützteil (78) bildet.

8. Gasflaschenventil nach einem der Ansprüche 2 bis 7, dadurch gekennzeichnet, daß am Stößelkopf (64) oben ein Dichtungsring (94) sitzt, der im Ruhezustand von der Stößelfeder (74) an die Anlagefläche (60) gedrückt wird.

9. Gasflaschenventil nach wenigstens einem der Ansprüche 1 bis 8, dadurch gekennzeichnet, daß der Stößel (62) in einer Buchse mit Führungsloch (80) geführt und sein unteres Ende des Stößels (62) verbreitert ist, insbesondere zu einem Konus (96), dessen Bodenfläche mit dem Anlagestück (38) des Schließventils (34) in Berührung bringbar ist.

10. Gasflaschenventil nach wenigstens einem der Ansprüche 1 bis 9 , dadurch gekennzeichnet, daß das Einsatz-Widerlager (40) als Korb mit zentrischer Bohrung (42) zur Gleitführung des Stiftes (44) ausgebildet ist.

11. Gasflaschenventil nach wenigstens einem der Ansprüche 1 bis 10, dadurch gekennzeichnet, daß der Einsatz (30) einen unteren Fortsatz (48) mit radialen Vorsprüngen (50) aufweist, die bei eingerastetem Widerlager (40) von daran angeordneten, nach innen gerichteten Rastnasen (52) übergriffen werden.

12. Gasflaschenventil nach Anspruch 11, dadurch gekennzeichnet, daß die radialen Vorsprünge (50) am Fortsatz (48) in der Druntersicht einen Dreikant bilden, an dem die Rastnasen (52) des Widerlagers (40) als formgleicher Dreikant-Hohlteil mit kombinierter Axial drehbewegung ein-. und ausrastbar sind.

13. Gasflaschenventil nach wenigstens einem der Ansprüche 10 bis 12, dadurch gekennzeichnet, daß das Widerlager (40) außen ein Sieb, Filter o. dgl. aufweist, namentlich einstückig mit dem Korb oder Korbrand.

14. Gasflaschenventil nach wenigstens einem der Ansprüche 1 bis 13, dadurch gekennzeichnet, · daß die Ventilfeder (36) zugleich Rastfeder für das abnehmbare Widerlager (40) ist.

**Claims**

1. Gas bottle valve for broaching, in particular, combustible liquid gas according to demand, comprising a valve box (12) consisting of a substantially cylindrical upper portion (14), a central screw portion (16) and a lower portion (24) designed as a hollow threaded cone, the central portion or the lower portion including a transverse bore (20) for receiving a safety valve (22) and the upper portion (14) having at its outside a groove (26) onto which a ball clamping ring (K) of a snap-on diaphragm governor (R) is lockable, and comprising an insert (30) arranged in the upper portion (14) including a ring seal (32) with a spring-loaded governor valve (34) whose valve spring (36) bears on a holder (40), wherein the insert (30) is adapted to be screwed into the upper portion (14), the spring load acts on engaging means (38) and the holder is detachably mounted to the insert, the engaging means (38) being slidably guided in the holder and being adapted to be controlled by a control pin (S) connected to the governor diaphragm (M), and wherein detachable obturator means (54) are arranged in the insert (30) supporting a spring-loaded tappet (62) which is engaged by the control pin.

2. Gas bottle valve according to claim 1, wherein a flange (56) having inside an abutting surface (60) for the tappet head (64) is flush with the top face of the insert (30) when the obturator means (54) are in the fully screwed-in position.

3. Gas bottle valve according to claim 1 or 2, wherein the top of the insert (30) includes a screwing aid, in particular an outer head profile or indentations (58) for applying a tool to the obturator means (54), e. g. to two diametrically opposite socket holes, screw head slots or the like in the outer face of the obturator means.

4. Gas bottle valve according to any one of claims 1 to 3, wherein the obturator means (54) comprise a further screwed insert (66) that has open-ended slots (70) and holds a spring support (72).

5. Gas bottle valve according to any one of claims 1 to 3, wherein the obturator means (54) comprise a screw cap (76) as well as a bear-up base (78) for a tappet spring (74).

6. Gas bottle valve according to claim 4 or claim 5, wherein a guide hole (80) is provided in the spring support (72) and/or in the bear-up base (78) for guiding the tappet shaft (82) and wherein the bottom portion (68) of the obturator (54) comprises at least two claws (88) for seizing the spring support (72) and/or the bear-up base (78).

7. Gas bottle valve according to claim 5 or claim 6, wherein an upper bead (90) of a bush (84) is adapted to be locked in the screw cap (76), the lower end of bush (84) forming the spring support (72) or the bear-up base (78), respectively.

8. Gas bottle valve according to any one of claims 2 to 7, wherein at the top of the tappet head (64), there is a seal ring (94) which in the neutral condition is forced onto the abutting surface (60) by the tappet spring (74).

9. Gas bottle valve according to any one of claims 1 to 8, wherein the tappet (62) is guided in a guide hole (80) of a bush end wherein the lower end of tappet (62) is enlarged, in particular to form a cone (96) whose bottom face is adapted to contact the engaging means (38) of the governor valve (34).

10. Gas bottle valve according to any one of claims 1 to 9, wherein the holder (40) at the insert is cage-like and is provided with a central bore (42) for slidably guiding the stem (44).

11. Gas bottle valve according to any one of claims 1 to 10, wherein the insert (30) has a bottom extension (48) comprising radial lugs (50) adapted to be seized by inwardly pointing dogs (52) of holder (40) for securing the latter.

12. Gas bottle valve according to claim 11, wherein the radial lugs (50) at extension (48) form a three-square stud, as seen from below, the dogs (52) of holder (40) forming a matching three-square hollow body adapted to be mounted to the stud and to be dismounted therefrom by combined axial and rotary movements.

13. Gas bottle valve according to any one of claims 1 to 12, wherein the holder (40) has outside a sieve, filter or the like that is, in particular, integral with the cage or its edge.

14. Gas bottle valve according to any one of claims 1 to 13, wherein the valve spring (36) is also adapted to provide a locking force for the detachable holder (40).

**Revendications**

1. Valve de bouteille à gaz permettant d'effectuer, selon les besoins, la prise en particulier de gaz liquide combustible, avec une cage de soupape (12), constituée par une partie supérieure approximativement cylindrique (14), une partie centrale à vis (16) et une partie inférieure réalisée sous forme d'un cône fileté creux (24), la partie centrale ou la partie inférieure étant pourvues d'une forure transversale (20) destinée au logement d'une soupape de sûretée (22) et la partie supérieure (14) présentant à l'extérieur une rainure (26), à laquelle peut s'encliqueter une bague de serrage sphérique (K) d'un régulateur de pression à diaphragme (R) à emboîtement, et avec un insert (30) disposé à la partie supérieure (14) muni d'une garniture à anneau (32), lequel présente une soupape de réglage (34) commandée par ressort, dont le ressort de soupape (36) s'appuie à une butée (40), caractérisée en ce que l'insert (30) peut être vissé dans la partie supérieure (14), en ce que la charge par ressort agit sur une pièce d'appui (38) et en ce que la butée (40) est disposée à l'insert de manière amovible, la pièce d'appui (38) étant guidée à glissement dans la butée et pouvant être commandée au moyen d'une cheville de commande (S) reliée au diaphragme de réglage (M), et en ce que, à l'intérieur de l'insert, il est disposée une fermeture amovible (54), logeant un poussoir commandé par ressort (62), sur lequel agit la cheville de commande.

2. Valve de bouteille à gaz suivant la revendication 1, caractérisée en ce qu'une bride (56) possédant à l'intérieur une face d'appui (60) pour la tête du poussoir (64) se termine, à la fermeture (54) complètement vissée, à fleur de la face frontale supérieure de l'insert (30).

3. Valve de bouteille à gaz suivant la revendication 1 ou 2, caractérisée en ce que, à la tête de l'insert (30), il est prévu un dispositif pour faciliter le vissage, en particulier sous forme d'un profil extérieur ou d'ouvertures d'insertion (58) permettant d'appliquer un outil à la fermeture (54), par exemple en disposant à la face supérieure de celle-ci deux trou borgnes, fentes à vis etc. diamétralement opposés l'un à l'autre.

4. Valve de bouteille à gaz suivant une des revendications 1 à 3, caractérisée en ce que la fermeture (54) présente une douille filetée (66) munie, dans sa partie inférieure (68), de fentes oblongues (70) se terminant en bout ouvert, laquelle porte une bride de ressort formant palier (72).

5. Valve de bouteille à gaz suivant une des revendications 1 à 3, caractérisée en ce que la fermeture (54) présente un bouchon fileté (76) et une pièce de support (78) pour un ressort de poussoir (74).

6. Valve de bouteille à gaz suivant une des revendications 4 et 5, caractérisée en ce que, à l'intérieur de la bride de ressort formant palier (72) resp. de la pièce de support (78), il est prévu un trou de guidage (80) pour la tige du poussoir (82) et en ce que, à la partie inférieure (68) de la fermeture (54), sont disposés au moins deux crochets (88) passant sous la bride de ressort formant palier (72) resp. la pièce de support (78).

7. Valve de bouteille à gaz suivant la revendication 5 ou 6, caractérisée en ce que au bouchon fileté (76) peut s'encliqueter un bourrelet supérieur (90) d'une douille (84), dont le bout inférieur forme la bride de ressort formant palier (72) resp. la pièce de support (78).

8. Valve de bouteille à gaz suivant une des revendications 2 à 7, caractérisée en ce que, en haut de la tête du poussoir (76), il est disposé un anneau de garniture (94), lequel, en état de repos, est pressé par le ressort du poussoir (74) contre la face d'appui (60).

9. Valve de bouteille à gaz suivant au moins une des revendications 2 à 8, caractérisée en ce que le poussoir (62) est guidé dans une douille avec trou de guidage (80) et que le bout inférieur du poussoir (62) est élargi, en particulier en forme de cône (96), dont la base peut être mise en contact avec la pièce d'appui (38) de la soupape de fermeture (34).

10. Valve de bouteille à gaz suivant au moins une des revendications 1 à 9, caractérisée en ce que la butée de l'insert (40) est réalisée sous forme d'un panier avec forure centrée (42) destiné au guidage à glissement de la cheville (44).

11. Valve de bouteille à gaz suivant au moins une des revendications 1 à 10, caractérisée en ce que l'insert (30) présente un prolongement inférieur (48) muni de saillies radiales (50), lesquelles, la butée (40) étant encliquetée, sont recouvertes par des nez d'arrêt (52) y disposés et dirigés vers l'intérieur.

12. Valve de bouteille à gaz suivant la revendication 11, caractérisée en ce que les saillies radiales (50) disposées au prolongement (48) forment, en vue d'en bas, un triangle, auquel les nez d'arrêt (52) de la butée (40) peuvent s'encliqueter et se décliqueter en tant que pièce creuse triangulaire avec mouvement rotatif et axial combiné.

13. Valve de bouteille à gaz suivant au moins une des revendications 10 à 12, caractérisée en ce que la butée (40) présente à l'extérieur un tamis, un filtre etc., étant en particulier réalisé en une seule pièce avec le panier ou le bord du panier.

14. Valve de bouteille à gaz suivant au moins une des revendications 1 à 13, caractérisée en ce que le ressort de soupape (36) est un même temps ressort à cran d'arrêt pour la butée amovible (40).

0 108 972

Fig. 1

1

Fig. 2

Fig. 3a

Fig. 3b

Fig. 4a

Fig. 4b

Fig. 5a

Fig. 5b

Fig. 6